# EUROPEAN PATENT SPECIFICATION

(11) **EP 1 026 535 B1**
(45) Date of publication and mention of the grant of the patent: **13.04.2005**
(21) Application number: 00830064.2
(22) Date of filing: 28.01.2000
(51) Int. Cl.: G02B 26/08, G02F 1/00, G02B 26/02

(54) **Optical device with magnetically operated micro-shutters or micro-mirrors**
Optische Vorrichtung mit magnetisch betriebenen Mikroverschlüssen oder Mikrospiegeln
Dispositif optique avec micro-obturateurs ou micromiroirs à commande magnétique

(30) Priority: 02.02.1999 IT TO990071
(43) Date of publication of application: 09.08.2000
(73) Proprietor: C.R.F. Società Consortile per Azioni, 10043 Orbassano (TO) (IT)
(72) Inventor: Pizzi, Marco, 10043 Orbassano (Torino) (IT); Perlo, Piero, 12048 Sommariva Bosco (Cuneo) (IT); Koniachkine, Valerian, 10043 Orbassano (Torino) (IT); Lambertini, Vito, 10049 Giaveno (IT)
(74) Representative: Notaro, Giancarlo

(56) References cited:
- EP-A- 0 614 101
- US-A- 5 784 189
- MILLER R A ET AL: "MICROMACHINED ELECTROMAGNETIC SCANNING MIRRORS" OPTICAL ENGINEERING, SOC. OF PHOTO-OPTICAL INSTRUMENTATION ENGINEERS. BELLINGHAM, US, vol. 36, no. 5, 1 May 1997 (1997-05-01), pages 1399-1407, XP000692371 ISSN: 0091-3286

## Description

The present invention relates to an optical device with micro-shutters or micro-mirrors.

Low-power and small-sized electrostatic motors suitable for use as actuators in micro-electronics technology applications have already been proposed in the past for actuating mechanical devices and the like in conditions where vibrations occur, such as in the automotive field. The said electrostatic actuators make use of electrically conductive flexible laminas, each of which has one end associated to a stator and the opposite end adjacent to a translator. The application of voltage pulses between the laminas and an electrode associated to the translator causes adhesion by electrostatic effect of the laminas to the translator, with the consequent movement of the latter with respect to the stator.

An actuator of the type referred to above is, for instance, described in Dyatlov V.L., Konyaskin V.V., Potapov B.S., and Pyankov Y.A., "Prospects of the Employment of Synchrotron Radiation in Film Electrostatic Actuator Technology", Nuclear Instruments and Methods in Physics Research, A359 (1995), Pages 394-395.

The present applicant has proposed, in co-pending patent applications, the use of electrostatic laminas for making optical elements which may be used, for example, in infrared vision systems for motor vehicles, or else in display systems for on-board vehicle instrumentation. According to the said proposals, a matrix of laminas, in the form of optical micro-mirrors or micro-shutters, is arranged on a substrate, each lamina being connected at one end to the substrate and being displaceable by electrostatic effect between a resting condition in which it is curved, so that the free end of the lamina is at a distance from the substrate, and a straightened-out condition in which the lamina adheres to the substrate. The displacement of each lamina from the resting condition to the straightened-out condition is obtained by the application of voltage between the lamina and an electrode associated to it which is carried by the substrate. When the voltage pulse is applied, the lamina adheres to the substrate by electrostatic effect, whereas when the voltage is interrupted, the lamina returns to its resting condition owing to its own elasticity.

The purpose of the present invention is to propose a new type of optical device with micro-shutters or micro-mirrors which is based upon a different operating principle.

According to the present invention, an optical device with micro-shutters or micro-mirrors is provided, comprising:
a substrate; and
a matrix of micro-shutters or micro-mirrors, in the form of thin-film laminas arranged on the substrate, each of the laminas having one end connected to the substrate and the other end free, and each being displaceable between a curved, resting condition, in which the free end is at a distance from the substrate, and a straightened-out condition, in which the lamina adheres to the substrate,
in which said substrate is made of ferromagnetic or paramagnetic material, and in which said laminas are made of a ferromagnetic material and are provided with magnetically operated control means for controlling displacement of the laminas from the resting condition to the condition in which they adhere to the substrate.

In a preferred embodiment, the laminas are made of a material chosen from among nickel, iron, superelastic alloys, and ferromagnetic polymers. The laminas may function in a passive way, i.e., be polarized and move owing to an external magnetic field obtained with electromagnets positioned in such a way as to control the field in a point-wise or uniform way so as to enable control of the laminas selectively or control of all the laminas simultaneously. Alternatively, the laminas may be used in an active way to generate a magnetic field by being traversed by an electric current. In this latter case, the interaction with the material of the substrate - which may consist of ferromagnetic material, or be a permanent magnet, or be equipped with electromagnet means - enables the position of the laminas to be controlled, also in a selective way, according to rows and columns.

One of the advantages of the device according to the invention as compared to a device with electrostatically operated laminas lies in the fact that the magnetic field can be used both to activate the laminas from the resting, i.e. curved, condition to the straightened-out condition, where the laminas adhere to the substrate, and to push them in the reverse direction, in that it is sufficient, for this purpose, to control the activating magnetic field accordingly.

The invention will now be described with reference to the attached drawings, which are provided purely as a non-limiting example and in which:
Figure 1 is a schematic perspective view of a first embodiment of the device according to the invention;
Figure 2 is a cross-sectional view of the device of Figure 1;
Figure 3 illustrates a variant of Figure 1; and
Figure 4 presents a cross-sectional view of a further variant.

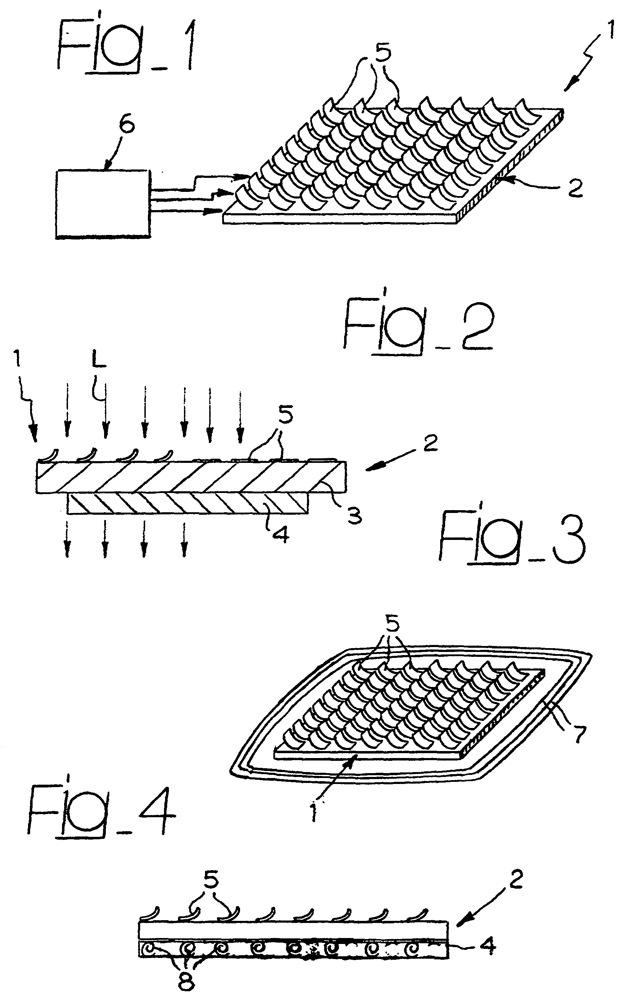

In Figure 1, the reference number 1 designates, as a whole, a matrix of ferromagnetic micro-shutters according to the invention. With reference also to Figure 2, the device 1 comprises a substrate 2, which, in the case illustrated, consists of a glass lamina or plastic lamina 3 that is transparent to light, in the desired wave band, and has a thickness of a few millimetres or centimetres. On the bottom surface of the substrate 3 is applied a layer 4 of paramagnetic material. Applied on top of the substrate 2 is a plurality of laminas made of ferromagnetic material chosen from among materials such as nickel, iron, superelastic alloys, and ferromagnetic polymers, in the form of a film having a thickness of between a few fractions of micron and a few micron. Each lamina, designated by the reference number 5, is fixed at one of its ends to the surface of the substrate 2. A film is used having a certain radius of curvature, in such a way that in the resting condition the film making up each lamina 5 remains curled up, or in any case raised, with the free end at a distance from the substrate 2. In this condition, rays of light L can pass freely through the matrix of micro-shutters 5 and through the substrate 2.

The laminas 5 may be brought into an unfurled condition, in which they adhere completely to the substrate 2 (as may be seen in the right-hand part of Figure 2) by magnetic effect. More precisely, in the embodiment illustrated in Figures 1 and 2 the laminas are used actively by being traversed by an electric current in such a way as to create a magnetic field which causes adhesion of the laminas 5 to the substrate 2. In Figure 1, the reference number 6 designates, as a whole, electronic control means for controlling supply of electric current to the laminas 5. Of course, it is possible to envisage an application in which all the laminas 5 are supplied simultaneously with an electric current in a way whereby all the laminas of the matrix are simultaneously able to displace from the resting condition to the condition in which they adhere to the substrate. According to a variant, the possibility may be envisaged of supplying electric current selectively to the various micro-shutters 5 in a way whereby each time only one part of the micro-shutters 5 remain open, so enabling passage of the luminous flux L, whereas another part (the part on the right in Figure 2) remains closed. An optical device of the type referred to above may be advantageously used, for example, in infrared vision systems of the type forming the subject of a co-pending patent application of the present applicant, or in display systems for panels on board motor vehicles, or for adaptive optical devices, or other similar applications.

Alternatively, it is possible to envisage the laminas 5 in such a way that they make up micro-mirrors that are able to be operative in the condition in which they adhere to the substrate.

Figure 3 illustrates a variant in which the laminas 5 are made to function in a passive way; i.e., they are polarized by an external magnetic field obtained by means of turns 7 surrounding the device 1, or turns 8 (Figure 4) associated to the base 4. When the turns 8 are traversed by electric current, they create a magnetic field which polarizes the laminas 5. The turns may be arranged in such a way as to be able to control the laminas 5 selectively or all of them together simultaneously. For instance, in the case illustrated in Figure 4, the various turns 8 may be supplied selectively with electric current so as to be able to control the laminas 5 according to rows and columns. Also the intermediate portions of the laminas may be used either dynamically or statically by appropriately calibrating the magnetic field in order to obtain stable intermediate positions.

Of course, without prejudice to the principle of the invention, the details of construction and the embodiments may vary widely with respect to what is herein described and illustrated purely to provide an example.

## Claims

1. An optical device with micro-shutters or micro-mirrors, comprising:
a substrate (2); and
a matrix of micro-shutters or micro-mirrors (5), in the form of thin-film laminas arranged on the substrate (2), each of the laminas having one end connected to the substrate (2) and the other end free, and each being displaceable between a curved, resting condition, in which the free end is at a distance from the substrate (2), and a straightened-out condition, in which the lamina adheres to the substrate (2),
in which said substrate (2) includes a layer of ferromagnetic or paramagnetic material, and said laminas (5) are made of a ferromagnetic material, and in which magnetically operated control means (6; 7; 8) are provided for controlling displacement of the laminas (5) from the resting condition to the condition in which they adhere to the substrate.

2. An optical device according to Claim 1, **characterized in that** said control means include electromagnet means (7; 8) for generating a magnetic field designed to polarize the laminas and to activate them on the substrate (2).

3. An optical device according to Claim 1, **characterized in that** said control means (6) are designed to supply electric current to said laminas (5) in such a way as to magnetize them.

4. An optical device according to Claim 1, **characterized in that** said control means (6; 7; 8) are designed to control said laminas (5) selectively, and **in that** electronic control means (6) are provided for controlling the control means.

## Patentansprüche

1. Optische Vorrichtung mit Mikroverschlüssen oder Mikrospiegeln, die aufweist:
ein Substrat (2); und
eine Matrix aus Mikroverschlüssen oder Mikrospiegeln (5) in der Form von Dünnfilmplatten, angeordnet auf dem Substrat (2), wobei jede der Platten ein Ende verbunden mit dem Substrat (2) und das andere Ende frei besitzt, und wobei jede zwischen einem gekrümmten, ruhenden Zustand, in dem sich das freie Ende unter einem Abstand von dem Substrat (2) befindet, und einem gerade ausgerichteten Zustand, in dem die Platte an dem Substrat (2) anhaftet, verschiebbar ist,
wobei das Substrat (2) eine Schicht aus ferromagnetischem oder paramagnetischem Material umfasst, und wobei die Platten (5) aus einem ferromagnetischen Material gebildet sind und wobei magnetisch betätigte Steuereinrichtungen (6; 7; 8) zum Steuern einer Verschiebung der Platten (5) von dem Ruhezustand zu dem Zustand, in dem sie an dem Substrat anhaften, vorgesehen sind.

2. Optische Vorrichtung nach Anspruch 1, **dadurch gekennzeichnet, dass** die Steuereinrichtungen elektromagnetische Einrichtungen (7; 8) zum Erzeugen eines magnetischen Felds, ausgelegt so, um die Platten zu polarisieren und um sie auf dem Substrat (2) zu aktivieren, umfassen.

3. Optische Vorrichtung nach Anspruch 1, **dadurch gekennzeichnet, dass** die Steuereinrichtungen (6) so ausgelegt sind, um einen elektrischen Strom zu den Platten (5) in einer solchen Art und Weise zuzuführen, um sie zu magnetisieren.

4. Optische Vorrichtung nach Anspruch 1, **dadurch gekennzeichnet, dass** die Steuereinrichtungen (6; 7; 8) so ausgelegt sind, um die Platten (5) selektiv zu steuern, und dass die elektronischen Steuereinrichtungen (6) zum Steuern der Steuereinrichtungen vorgesehen sind.

## Revendications

1. Dispositif optique ayant des micro-obturateurs ou des micro-miroirs comprenant :
un substrat (2) ; et
une matrice de micro-obturateurs ou de micro-miroirs (5), sous la forme de lamelles de film fin disposées sur le substrat (2), chacune des lamelles ayant une extrémité fixée au substrat (2) et l'autre extrémité libre et chacune pouvant être déplacée entre une position incurvée de repos, dans laquelle l'extrémité libre est à une certaine distance du substrat (2), et un état raidi, dans lequel la lamelle adhère au substrat (2),
dans lequel ledit substrat (2) comprend une couche d'un matériau ferromagnétique ou paramagnétique, et lesdites lamelles (5) sont constituées d'un matériau ferromagnétique, et dans lequel des moyens de contrôle à commande magnétique (6 ; 7 ; 8) sont prévus pour contrôler le déplacement des lamelles (5) de l'état de repos à l'état dans lequel elles adhèrent au substrat.

2. Dispositif optique selon la revendication 1, **caractérisé en ce que** lesdits moyens de contrôle comprennent des moyens électromagnétiques (7 ; 8) pour générer un champ magnétique conçu pour polariser les lamelles et pour les activer sur le substrat (2).

3. Dispositif optique selon la revendication 1, **caractérisé en ce que** lesdits moyens de contrôle (6) sont conçus pour délivrer un courant électrique aux dites lamelles (5) de manière telle à les magnétiser.

4. Dispositif optique selon la revendication 1, **caractérisé en ce que** lesdits moyens de contrôle (6 ; 7 ; 8) sont conçus pour contrôler lesdites lamelles (5) de manière sélective, et **en ce que** des moyens de contrôle électroniques (6) sont prévus pour contrôler les moyens de contrôle.
